(19) Europäisches Patentamt
European Patent Office
Office européen des brevets

(11) EP 4 775 607 A1

(12) **EUROPEAN PATENT APPLICATION**
published in accordance with Art. 153(4) EPC

(43) Date of publication:
**15.07.2026 Bulletin 2026/29**

(21) Application number: **24862432.2**

(22) Date of filing: **09.07.2024**

(51) International Patent Classification (IPC):
***C08F 290/04*** (2006.01) ***C09J 4/02*** (2006.01)
***C09J 11/04*** (2006.01) ***C09J 11/06*** (2006.01)
***C09K 3/10*** (2006.01)

(52) Cooperative Patent Classification (CPC):
**C08F 290/04; C09J 4/00; C09J 11/04; C09J 11/06; C09K 3/10**

(86) International application number:
**PCT/JP2024/024698**

(87) International publication number:
**WO 2025/052775 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.09.2023 JP 2023145146**

(71) Applicant: **ThreeBond Co., Ltd.**
**Tokyo 192-0398 (JP)**

(72) Inventors:
- **TATEOKA, Yuki**
  **Hachioji-shi, Tokyo 192-0398 (JP)**
- **SUZUKI, Nao**
  **Hachioji-shi, Tokyo 192-0398 (JP)**
- **TANAKA, Masayuki**
  **Hachioji-shi, Tokyo 192-0398 (JP)**

(74) Representative: **Crow, Martin et al**
**Venner Shipley LLP**
**TIDE Bankside**
**8 Emerson Street**
**London SE1 9DU (GB)**

(54) **PHOTOCURABLE RESIN COMPOSITION**

(57) An object of the present invention is to provide a photocurable resin composition, which has excellent adhesion strength to various materials, and achieves excellent resin strength in its cured product. The present invention relates to a photocurable resin composition containing: a component (A) to a component (C) below.
Component (A): a polyisobutylene resin containing one or more (meth)acryloyl groups and a $-[CH_2C(CH_3)_2]-$ unit;
Component (B): a compound having one or more (meth) acryloyl groups and one or more hydrolyzable silyl groups, having a main chain consisting of an organic chain, and having a weight average molecular weight of 300 or more (provided that the component (A) is excluded); and
Component (C): a photoradical polymerization initiator.

EP 4 775 607 A1

## Description

### TECHNICAL FIELD

The present invention relates to a photocurable resin composition having high adhesion strength to various materials (particularly, aluminum, polycarbonates, and acrylic resins).

### BACKGROUND ART

In recent years, the automotive industry has used plastic materials to reduce weight and to improve fuel efficiency. Since plastic materials are inert on the surfaces and have low polarity, they are less compatible with adhesives than metal materials, making it difficult to achieve high adhesion strength. Furthermore, since parts composed of only plastic materials have low rigidity, they are often used in combination with metal materials. Among metals, since aluminum easily forms an oxide coating film on its surface, the surface is inert similarly to plastics, and adhesives and sealing agents used are required to have high adhesion strength (Japanese Patent Laid-Open No. 2020-023674). Furthermore, since application of heat for plastic adhesion may possibly deform an adherend depending on materials of plastics, photocurable adhesives and sealing agents that do not require application of heat to plastic materials are required.

### SUMMARY OF INVENTION

A sealing agent having a polyisobutylene backbone in the main backbone may be used because of low moisture permeability, gas barrier property, and water resistance. However, such a sealing agent has a problem that the adhesion strength is low due to the backbone having low polarity.

The present invention is made in consideration of the above circumstances, and has an object to provide a photocurable resin composition that can be cured using light such as ultraviolet rays without applying heat to an adherend, has higher adhesion strength to various materials (particularly, aluminum, acrylic resins, and polycarbonates), and achieves high resin strength in its cured product.

The gist of the present invention will be next described.

[1] A photocurable resin composition containing: a component (A) to a component (C) below:

component (A): a polyisobutylene resin containing one or more (meth)acryloyl groups and a $-[CH_2C(CH_3)_2]-$ unit;

component (B): a compound having one or more (meth)acryloyl groups and one or more hydrolyzable silyl groups, having a main chain consisting of an organic chain, and having a weight average molecular weight of 300 or more (provided that the component (A) is excluded); and

component (C): a photoradical polymerization initiator.

[2] The photocurable resin composition according to [1], wherein the photocurable resin composition contains 0.01 to 20 parts by mass of the component (B) relative to 100 parts by mass of the component (A).

[3] The photocurable resin composition according to [1] or [2], wherein the component (C) is an acylphosphine oxide-based photoradical polymerization initiator.

[4] The photocurable resin composition according to any of [1] to [3], further containing a (meth)acrylic monomer as a component (D).

[5] The photocurable resin composition according to any of [1] to [4], further containing an inorganic filler as a component (E).

[6] The photocurable resin composition according to [5], wherein the photocurable resin composition contains 1 to 50 parts by mass of the component (E) relative to 100 parts by mass of the component (A).

[7] A sealing agent or adhesive consisting of the photocurable resin composition according to any of [1] to [6].

[8] The sealing agent or adhesive according to [7], which is used for an adherend containing at least one material selected from the group consisting of aluminum, an acrylic resin, and a polycarbonate.

[9] A cured product obtained by irradiating the photocurable resin composition according to any of [1] to [6] with light.

## DESCRIPTION OF EMBODIMENTS

Hereinafter, embodiments of the present invention will be described. However, the present invention is not limited to only these embodiments. In the present specification, "X to Y" means a range that includes the numerical values (X and Y) before and after it as the lower limit and the upper limit, and means "X or more and Y or less". In the present invention, a compound having a (meth)acryloyl group refers to (meth)acrylate. The (meth)acryloyl group may have a (meth)acryloyl group as a form of a (meth)acryloyloxy group. In addition, the term "(meth)acryloyl" encompasses both acryloyl and methacryloyl. Therefore, for example, the term "(meth)acryloyl group" encompasses both an acryloyl group ($H_2C=CH-C(=O)-$) and a methacryloyl group ($H_2C=C(CH_3)-C(=O)-$). Similarly, the term "(meth)acrylate" encompasses both acrylate and methacrylate, the term "(meth)acryl" encompasses both acryl and methacryl, and the term "(meth)acrylamide" encompasses both acrylamide and methacrylamide.

One embodiment of the present invention relates to a photocurable resin composition containing: a component (A) to a component (C) below:

component (A): a polyisobutylene resin containing one or more (meth)acryloyl groups and a - $[CH_2C(CH_3)_2]$- unit;

component (B): a compound having one or more (meth)acryloyl groups and one or more hydrolyzable silyl groups, having a main chain consisting of an organic chain, and having a weight average molecular weight of 300 or more (provided that the component (A) is excluded); and

component (C): a photoradical polymerization initiator.

According to one embodiment of the present invention, a photocurable resin composition, which has excellent adhesion strength to various materials (for example, aluminum, plastics, and the like), and achieves excellent resin strength in its cured product, may be provided.

The component (A) used in the present invention is not particularly limited, as long as it is a polymer (polyisobutylene resin) having one or more (meth)acryloyl groups and having a polyisobutylene backbone including a -$[CH_2C(CH_3)_2]$- unit. For example, the component (A) may have a -$[CH_2C(CH_3)_2]$- unit (polyisobutylene backbone) and may be a polymer including "another constitution unit other than the - $[CH_2C(CH_3)_2]$- unit" in addition to the -$[CH_2C(CH_3)_2]$- unit. The component (A) includes the -$[CH_2C(CH_3)_2]$-unit in an amount, of for example, 70 mass% or more, preferably in an amount of 75 mass% or more, and more preferably in an amount of 80 mass% or more, relative to the total amount of the constitution unit. In addition, the component (A) may include, for example, the -$[CH_2C(CH_3)_2]$- unit in amount of less than 100 mass%, in amount of 95 mass% or less, or in amount of 90 mass% or less. The component (A) preferably has 1 to 12 (meth)acryloyl groups, more preferably has 2 to 8 (meth)acryloyl groups, still more preferably has 2 to 4 (meth)acryloyl groups, and particularly preferably has 2 (meth)acryloyl groups. In the present invention, the term "polymer" is not limited to any theory, but can be defined as, for example, a compound, which is a structure in which the main chain of a polymer includes repeating units of a monomer, and consists of 100 or more repeating units. In addition, the (meth)acryloyl group may exist either at a side chain or a terminal of the molecule (polyisobutylene backbone). The (meth)acryloyl group preferably exist at a terminal of the molecule from the viewpoints of high resin strength and excellent characteristics of a cured product. The component (A) preferably includes no reactive functional group other than a (meth)acryloyl group, more preferably includes only a (meth)acryloyl group, and still more preferably includes only an acryloyl group.

Since the component (A) according to the present invention makes it possible to obtain a cured product having low polarity and having excellent low moisture permeability, gas barrier property, and water resistance, a polymer (polyisobutylene resin) having a polyisobutylene backbone expressed by the following general formula (1) is preferable. Specific examples of the component (A) include polyisobutylene resins having a (meth)acryloyloxy alkoxyphenyl group. The backbone of the component (A) according to the present invention is a polyisobutylene backbone. As the monomer constituting a polyisobutylene backbone, a monomer other than isobutylene may be used as long as isobutylene is mainly used and the effect of the present invention is not impaired. That is, the component (A) according to the present invention may be a copolymer of isobutylene and a monomer other than isobutylene. Note that, the component (A) is preferably in liquid at normal temperature (25°C) from the viewpoint of wettability with plastic materials.

[Formula 1]

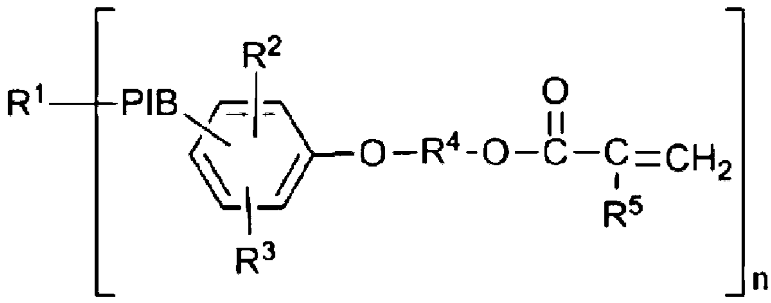 · · · (1)

In the general formula (1), $R^1$ represents a monovalent or polyvalent aromatic hydrocarbon group or a monovalent or polyvalent aliphatic hydrocarbon group. $R^1$ is preferably a polyvalent aromatic hydrocarbon group, and particularly preferably a bivalent phenylene group. PIB represents a polyisobutylene backbone including the $-[CH_2C(CH_3)_2]-$ unit (or consists of the $-[CH_2C(CH_3)_2]-$ unit). $R^4$ represents a bivalent hydrocarbon group having 2 to 6 carbon atoms. $R^4$ is preferably a bivalent hydrocarbon group having 2 or 3 carbon atoms. $R^4$ is more preferably an ethylene group or a propylene group, and particularly preferably an ethylene group. $R^2$ and $R^3$ each independently represent a hydrogen atom, or a monovalent hydrocarbon group having 1 to 20 carbon atoms. $R^2$ and $R^3$ are preferably a hydrogen atom. $R^5$ represents a hydrogen atom, a methyl group, or an ethyl group. $R^5$ is preferably a hydrogen atom or a methyl group. n represents any integer of 1 to 6. n is particularly preferably an integer of 2 to 4.

The molecular weight of the component (A) according to the present invention is not particularly limited. Since coating by screen printing can be performed and characteristics of a cured product such as high elongation and high strength are excellent, the number average molecular weight of the component (A) measured by chromatography is preferably 200 to 500,000, more preferably 1,000 to 100,000, and particularly preferably 3,000 to 50,000. Note that, the number average molecular weight can be calculated using size exclusion chromatography (SEC) in terms of the standard polystyrene conversion method.

The viscosity of the component (A) according to the present invention at 25°C is not particularly limited. The viscosity of the component (A) at 25°C is, for example, 5 Pa·s or more, preferably 50 Pa·s or more, and more preferably 100 Pa·s or more from the viewpoint of workability. The viscosity of the component (A) at 25°C is, for example, 3000 Pa·s or less, preferably 2500 Pa·s or less, more preferably 2000 Pa·s or less, and particularly preferably 1750 Pa·s or less. Unless otherwise specified, the viscosity is a value obtained by measuring the viscosity at 25°C using a cone-plate viscometer.

A method for producing the component (A) according to the present invention is not particularly limited, and a known approach can be used. As the method for producing the component (A), for example, a method, in which hydroxyl group-terminated polyisobutylene and acryloyl chloride or methacryloyl chloride are allowed to react, disclosed in Polymer Bulletin, vol. 6, pp. 135 to 141 (1981), T. P. Liao and J. P. Kennedy, and Polymer Bulletin, vol. 20, pp. 253 to 260 (1988), Puskas et al. can be used. In addition, as other methods for producing the component (A), a method in which hydroxyl group-terminated polyisobutylene and a compound having a (meth)acryloyl group and an isocyanate group are allowed to react, a method in which hydroxyl group-terminated polyisobutylene, a compound having an isocyanate group, and a compound having a (meth)acryloyl group and a hydroxyl group are allowed to react, a method in which hydroxyl group-terminated polyisobutylene and (meth)acrylic acid or a lower ester of (meth)acrylic acid are allowed to react using a dehydration esterification method or an esterification method, and the like can be used.

A method for producing the polymer having a polyisobutylene backbone represented by the above general formula (1) is not particularly limited. The method for producing the polymer having a polyisobutylene backbone represented by the general formula (1) is preferably a method as disclosed in Japanese Patent Laid-Open No. 2013-216782, in which halogen-terminated polyisobutylene and a compound having a (meth)acryloyl group and a phenoxy group that is represented by the following general formula (2) are allowed to react. The halogen-terminated polyisobutylene can be obtained by a known approach. The halogen-terminated polyisobutylene can be obtained by, for example, cationic polymerization, and is preferably obtained by living cationic polymerization.

[Formula 2]

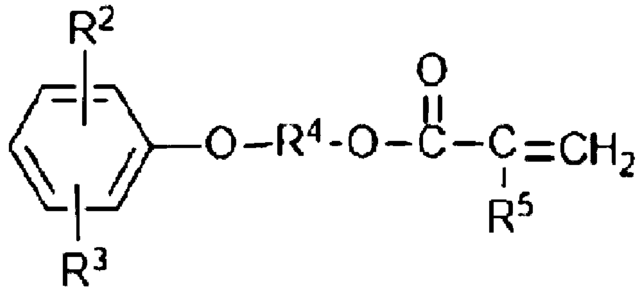

(2)

In the general formula (2), $R^2$, $R^3$, $R^4$, and $R^5$ are as defined in the formula (1). Specifically, $R^4$ represents a bivalent hydrocarbon group having 2 to 6 carbon atoms. $R^2$ and $R^3$ each independently represent a hydrogen atom or a monovalent hydrocarbon group having 1 to 20 carbon atoms. $R^5$ represents a hydrogen atom, a methyl group, or an ethyl group. Examples of the compound represented by the general formula (2) include, for example, phenoxymethyl (meth) acrylate, phenoxyethyl (meth)acrylate, phenoxypropyl (meth)acrylate, phenoxybutyl (meth)acrylate, and phenoxypentyl (meth)acrylate. The compound represented by the general formula (2) is preferably selected from phenoxyethyl (meth) acrylate, phenoxypropyl (meth)acrylate, phenoxybutyl (meth)acrylate, and phenoxypentyl (meth)acrylate.

The component (B) according to the present invention is a compound having one or more (meth)acryloyl groups and one or more hydrolyzable silyl groups, having a main chain consisting of an organic chain, and having a weight average molecular weight of 300 or more. Note that, as the component (B), a compound contained in the component (A) is excluded. In the present specification, the main chain means a carbon chain having the largest number of carbon atoms in one molecule. In the present specification, the organic chain is composed of only an atom selected from the group consisting of carbon, hydrogen, and oxygen. From the viewpoint of compatibility with the component (A), the organic chain preferably consists of only carbon and hydrogen. The number of carbon atoms in the organic chain is preferably 5 or more, and more preferably 7 or more. The weight average molecular weight of the component (B) is 300 or more. The upper limit of the weight average molecular weight of the component (B) is not particularly limited, and is preferably less than 3000, more preferably less than 2000, and most preferably less than 1500. In the present specification, the weight average molecular weight refers to a weight average molecular weight (Mw) in terms of polystyrene measured by GPC (gel permeation chromatography). At this time, tetrahydrofuran is used as a solvent. In the photocurable resin composition according to the present invention, when use of a compound having one or more (meth)acryloyl groups and one or more hydrolyzable silyl groups, having a main chain consisting of an organic chain, and having a weight average molecular weight of less than 300 is not preferable because adhesion strength to an acrylic resin is decreased. Although the reason for this is unclear, when both the component (A) and the component (B) are contained, adhesion strength to an acrylic resin is improved. From the viewpoint of improving adhesion strength to both aluminum and acrylic resins, the functional group equivalent ratio of the (meth)acryloyl group relative to the hydrolyzable silyl group in one molecule of the component (B) is preferably 0.8 to 7, more preferably 0.9 to 5, and most preferably 1. Since adhesion strength to various materials is improved and a cured product can have excellent resin strength, when the weight average molecular weight of the component (B) is 300 or more and less than 800, a hydrolyzable silyl group is preferably bound to both terminals of the main chain, and when the weight average molecular weight of the component (B) is 800 or more, a hydrolyzable silyl group is preferably bound to a side chain.

In the present specification, the term "hydrolyzable silyl group" is a general term of a functional group in which one to three, preferably three, hydrolyzable groups such as alkoxy groups (for example, a methoxy group, an ethoxy group) are attached to a silicon atom. Examples of the hydrolyzable silyl group include a trimethoxy silyl group and a triethoxy silyl group.

Examples of the commercially available component (B) include, but are not limited to, X-12-1048, X-12-1050, and KBM-5803 (available from Shin-Etsu Chemical Co., Ltd.).

In the photocurable resin composition according to the present invention, the content (blending amount) of the (B) is preferably 0.01 to 20 parts by mass, more preferably 0.1 to 15 parts by mass, and most preferably 0.5 to 10 parts by mass, relative to 100 parts by mass of the component (A). When the content of the (B) is 0.01 to 20 parts by mass relative to 100 parts by mass of the component (A), there is no possibility of decreasing physical properties of a cured product such as resin strength, and adhesion power to various materials such as aluminum, acrylic resins, and polycarbonates can be improved.

The component (C) according to the present invention is a photoradical polymerization initiator. The component (C) is not particularly limited as long as it is a compound that generates radicals by emitting active energy rays. Here, examples of the active energy rays include all light in the broad sense, including radioactive rays such as $\alpha$-rays and $\beta$-rays, electromagnetic waves such as $\gamma$-rays and X-rays, electron beams, ultraviolet rays having a wavelength of about 100 to 400 nm, and visible rays having a wavelength of about 400 to 800 nm. The active energy rays are preferably ultraviolet rays. Examples of the component (C) include, for example, acetophenone-based photoradical polymerization initiators,

benzoin-based photoradical polymerization initiators, benzophenone-based photoradical polymerization initiators, thioxanthone-based photoradical polymerization initiators, acylphosphine oxide-based photoradical polymerization initiators, and titanocene-based photoradical polymerization initiators. Among them, from the viewpoint of obtaining high adhesion power to various adherends, the component (C) preferably includes at least one of an acetophenone-based photoradical polymerization initiator and an acylphosphine oxide-based photoradical polymerization initiator, and more preferably includes an acylphosphine oxide-based photoradical polymerization initiator. The component (C) preferably includes only an acylphosphine oxide-based radical polymerization initiator.

Examples of the acetophenone-based photoradical polymerization initiators include, but are not limited to, for example, diethoxyacetophenone, 2-hydroxy-2-methyl-1-phenyl-propan-1-one, benzyl dimethyl ketal, 4-(2-hydroxyethoxy)phenyl-(2-hydroxy-2-propyl)ketone, 1-hydroxy-cyclohexyl-phenyl-ketone, 2-methyl-2-morpholino(4-thiomethylphenyl)propan-1-one, 2-benzyl-2-dimethylamino-1-(4-morpholinophenyl)butanone, and 2-hydroxy-2-methyl-1-[4-(1-methylvinyl)phenyl]propanone oligomers. Examples of the commercially available acetophenone-based photoradical polymerization initiators include IRGACURE (registered trademark) 184, IRGACURE (registered trademark) 1173, IRGACURE (registered trademark) 2959, and IRGACURE (registered trademark) 127 (available from BASF), and ESACURE (registered trademark) KIP-150 (available from Lamberti s.p.a.).

Examples of the acylphosphine oxide-based photoradical polymerization initiators include, but are not limited to, for example, bis(2,4,6-trimethylbenzoyl)-phenyl-phosphine oxide, and 2,4,6-trimethylbenzoyl-diphenyl-phosphine oxide. Examples of the commercially available acylphosphine oxide-based photoradical polymerization initiators include Omnirad (registered trademark) TPO and Omnirad (registered trademark) 819 (available from IGM Resins B.V.), and IRGACURE (registered trademark) 819DW (available from BASF).

In the photocurable resin composition according to the present invention, the blending amount (content) of the component (C) is not particularly limited. The blending amount of the component (C) is, for example, 0.01 to 20 parts by mass, preferably 0.1 to 10 parts by mass, and particularly preferably 0.5 to 5 parts by mass, relative to 100 parts by mass of the component (A). Within the above ranges, a photocurable resin composition having good adhesion strength to adherends formed of various materials can be obtained.

In one embodiment of the present invention, the photocurable resin composition preferably further includes a compound having a (meth)acryloyl group other than the component (A) as the component (D). Incorporation of the component (D) in the photocurable resin composition according to the present invention can further improve adhesion power. The component (D) is not particularly limited. Examples of the component (D) include, for example, oligomers and (meth)acrylate monomers such as urethane (meth)acrylate having a polybutadiene backbone, urethane (meth)acrylate having a hydrogenated polybutadiene backbone, urethane (meth)acrylate having a polycarbonate backbone, urethane (meth)acrylate having a polyether backbone, urethane (meth)acrylate having a polyester backbone, urethane (meth)acrylate having a castor oil backbone, isoprene-based (meth)acrylate, hydrogenated isoprene-based (meth)acrylate, epoxy (meth)acrylate, (meth)acryl group-containing acrylic polymer. In the present specification, the term "oligomer" refers to a polymer in which two to several tens of monomer units are repeated, and the weight average molecular weight thereof is 1,000 or more. From the viewpoint of improving adhesion strength to various materials, the component (D) preferably includes a (meth)acrylate monomer. Examples of the (meth)acrylate monomer include monofunctional (meth)acrylate monomers having one (meth)acryloyl group in one molecule and polyfunctional (meth)acrylate monomers having two or more (meth)acryloyl groups in one molecule. From the viewpoint of improving adhesion strength to various materials, the (meth)acrylate monomer preferably includes a monofunctional (meth)acrylate monomer and more preferably includes only a monofunctional (meth)acrylate monomer.

Examples of the monofunctional (meth)acrylate monomers include methoxy diethylene glycol mono(meth)acrylate, methoxy triethylene glycol mono(meth)acrylate, methoxy tetraethylene glycol mono(meth)acrylate, methoxy pentaethylene glycol mono(meth)acrylate, methoxy hexaethylene glycol mono(meth)acrylate, methoxy heptaethylene glycol mono(meth)acrylate, methoxy hectaethylene glycol mono(meth)acrylate, methoxy octaethylene glycol mono(meth)acrylate, methoxy nonaethylene glycol mono(meth)acrylate, methoxy decaethylene glycol mono(meth)acrylate, methoxy tripropylene glycol mono(meth)acrylate, methoxy tetrapropylene glycol mono(meth)acrylate, methoxy pentapropylene glycol mono(meth)acrylate, methoxy hexapropylene glycol mono(meth)acrylate, methoxy heptapropylene glycol mono(meth)acrylate, methoxy hectapropylene glycol mono(meth)acrylate, methoxy octapropylene glycol mono(meth)acrylate, methoxy nonapropylene glycol mono(meth)acrylate, methoxy decapropylene glycol mono(meth)acrylate, methoxy tributylene glycol mono(meth)acrylate, methoxy tetrabutylene glycol mono(meth)acrylate, methoxy pentabutylene glycol mono(meth)acrylate, methoxy hexabutylene glycol mono(meth)acrylate, methoxy heptabutylene glycol mono(meth)acrylate, methoxy hectabutylene glycol mono(meth)acrylate, methoxy octabutylene glycol mono(meth)acrylate, methoxy nonabutylene glycol mono(meth)acrylate, methoxy decabutylene glycol mono(meth)acrylate, ethoxy diethylene glycol mono(meth)acrylate, ethoxy triethylene glycol mono(meth)acrylate, ethoxy tetraethylene glycol mono(meth)acrylate, ethoxy pentaethylene glycol mono(meth)acrylate, ethoxy hexaethylene glycol mono(meth)acrylate, ethoxy heptaethylene glycol mono(meth)acrylate, ethoxy hectaethylene glycol mono(meth)acrylate, ethoxy octaethylene glycol mono(meth)acrylate, ethoxy nonaethylene glycol mono(meth)acrylate, ethoxy decaethylene glycol mono(meth)acrylate, ethoxy tripropylene glycol mono(meth)acrylate, ethoxy tetrapropylene glycol mono(meth)acrylate, ethoxy pentapropylene glycol mono(meth)acrylate, ethoxy hexapropylene glycol mono(meth) acrylate, ethoxy heptapropylene glycol mono(meth)acrylate, ethoxy hectapropylene glycol mono(meth)acrylate, ethoxy octapropylene glycol mono(meth)acrylate, ethoxy nonapropylene glycol mono(meth)acrylate, ethoxy decapropylene glycol mono(meth)acrylate, ethoxy tributylene glycol mono(meth)acrylate, ethoxy tetrabutylene glycol mono(meth) acrylate, ethoxy pentabutylene glycol mono(meth)acrylate, ethoxy hexabutylene glycol mono(meth)acrylate, ethoxy heptabutylene glycol mono(meth)acrylate, ethoxy hectabutylene glycol mono(meth)acrylate, ethoxy octabutylene glycol mono(meth)acrylate, ethoxy nonabutylene glycol mono(meth)acrylate, and ethoxy decabutylene glycol mono(meth) acrylate. Among them, from the viewpoint of improving adhesion strength to various adherend materials, the weight average molecular weight of the monofunctional (meth)acrylate monomer is preferably less than 500. The monofunctional (meth)acrylate monomer preferably includes (meth)acrylate having an alicyclic structure in a molecule, more preferably includes isobornyl (meth)acrylate, and most preferably includes isobornyl acrylate. The monofunctional (meth)acrylate monomer can be used alone or by mixing two or more kinds thereof.

Examples of the polyfunctional (meth)acrylate monomers include tetrafunctional (meth)acrylate monomers such as ditrimethylolpropane tetra(meth)acrylate and pentaerythritol tetra(meth)acrylate; pentafunctional (meth)acrylate monomers such as dipentaerythritol monohydroxy penta(meth)acrylate, alkyl-modified dipentaerythritol penta(meth) acrylate, and dipentaerythritol penta(meth)acrylate; and hexafunctional (meth)acrylate monomers such as dipentaerythritol hexa(meth)acrylate. Among them, the polyfunctional (meth)acrylate monomer is preferably selected from the group consisting of dipentaerythritol monohydroxy penta(meth)acrylate, alkyl-modified dipentaerythritol penta(meth)acrylate, dipentaerythritol hexa(meth)acrylate, and dipentaerythritol penta(meth)acrylate. The polyfunctional (meth)acrylate monomer can be used alone or by mixing two or more kinds thereof.

In the photocurable resin composition according to the present invention, the blending amount (content) of the component (D) is preferably 0.1 to 100 parts by mass, more preferably 1 to 50 parts by mass, and most preferably 10 to 30 parts by mass, relative to 100 parts by mass of the component (A). Within the above ranges, adhesion power can be further improved.

In one embodiment of the present invention, the photocurable resin composition preferably further includes an inorganic filler as a component (E). Examples of the inorganic filler include, for example, glass powder, fumed silica powder, alumina powder, mica powder, ceramic powder, silicone rubber powder, calcium carbonate powder, aluminum nitride powder, carbon powder, kaolin clay, dried clay minerals, and dried diatomaceous earth. From the viewpoint of improving resin strength without inhibiting the photocurable property, the component (E) is preferably fumed silica (powder) and most preferably fumed silica (powder) surface-treated with dimethyl silicone oil. From the viewpoint of improving resin strength when it is dispersed in the component (A), the BET specific surface area of the component (E) is preferably 50 to 200 $m^2$/g, more preferably 70 to 130 $m^2$/g, and most preferably 80 to 120 $m^2$/g.

Examples of the commercially available component (E) include the product name AEROSIL (registered trademark) R974, R972, R972V, R972CF, R805, R812, R812S, R816, R8200, RY200, RX200, RY200S, and R202 available from NIPPON AEROSIL CO., LTD.

In the photocurable resin composition according to the present invention, the blending amount (content) of the component (E) is preferably 0.1 to 100 parts by mass, more preferably 1 to 50 parts by mass, and most preferably 5 to 20 parts by mass, relative to 100 parts by mass of the component (A). Within the above ranges, resin strength can be improved without inhibiting the photocurable property.

In one embodiment of the present invention, the photocurable resin composition preferably further includes a defoaming agent as a component (F). Incorporation of the defoaming agent can remove bubbles from the photocurable resin composition after the photocurable resin composition is coated on an adherend and can improve the photocurable property, resin strength, and the like. The defoaming agent is not particularly limited. Examples of the defoaming agents include, for example, silicone-based defoaming agents, modified silicone-based defoaming agents, acetylene alcohol-based defoaming agents, silica-based defoaming agents, waxes, polyether modified polydimethylsiloxane, paraffin-based oil, and foam breaking aliphatic derivatives. Among them, the component (F) preferably includes a silicone-based defoaming agent.

In the photocurable resin composition according to the present invention, the content of the component (F) is preferably 0.01 to 10 parts by mass, more preferably 0.1 to 5 parts by mass, and most preferably 0.5 to 3 parts by mass, relative to 100 parts by mass of the component (A). Within the above ranges, the photocurable property can be improved, and there is not possibility of decreasing adhesion strength.

<Optional components>

Additives such as organic fillers, organic peroxides, storage stabilizers, antioxidants, photostabilizers, and surfactants (excluding the component contained in the component (F)) can be used for the photocurable resin composition according to the present invention within the range that does not impair the object of the present invention.

The organic filler may be a powder of organic matter composed of rubber, an elastomer, plastic, a polymer (or a copolymer), or the like. The organic filler may also be an organic filler having a multilayer structure such as a core-shell type. The organic filling agent may be used alone or in combination of two or more kinds thereof. The blending amount (content) (in the case of two or more kinds thereof, its total amount) of the organic filler is preferably 0.1 to 50 parts by mass relative to 100 parts by mass of the component (A).

An organic peroxide may be added to the photocurable resin composition according to the present invention for the purpose of imparting the curing property by heat or the redox reaction. Use of the redox reaction can generate radical species at room temperature. The organic peroxide is not particularly limited. Examples of the organic peroxide include, for example, ketone peroxides such as methyl ethyl ketone peroxide, cyclohexanone peroxide, 3,3,5-trimethylcyclohexanone peroxide, methylcyclohexanone peroxide, methyl acetoacetate peroxide, and acetylacetone peroxide; peroxyketals such as 1,1-bis(t-butyl peroxy)-3,3,5-trimethyl cyclohexane, 1,1-bis(t-butyl peroxy) cyclohexane, 2,2-bis(t-butyl peroxy)octane, n-butyl-4,4-bis(t-butyl peroxy)valerate, and 2,2-bis(t-butyl peroxy)butane; hydroperoxides such as t-butyl hydroperoxide, cumene hydroperoxide, diisopropylbenzene hydroperoxide, p-menthane hydroperoxide, 2,5-dimethylhexane-2,5-dihydroperoxide, and 1,1,3,3-tetramethylbutyl hydroperoxide; dialkyl peroxides such as di t-butyl peroxide, t-butyl cumyl peroxide, dicumyl peroxide, $\alpha,\alpha'$-bis(t-butyl peroxy-m-isopropyl)benzene, 2,5-dimethyl-2,5-di(t-butyl peroxy) hexane, and 2,5-dimethyl-2,5-di(t-butyl peroxy)hexyne-3; diacyl peroxides such as acetyl peroxide, isobutyryl peroxide, octanoyl peroxide, decanoyl peroxide, lauroyl peroxide, 3,5,5-trimethylhexanoyl peroxide, succinic acid peroxide, benzoyl peroxide, 2,4-dichlorobenzoyl peroxide, and m-toluoyl peroxide; peroxydicarbonates such as diisopropyl peroxydicarbonate, di 2-ethylhexyl peroxydicarbonate, di n-propyl peroxydicarbonate, bis-(4-t-butylcyclohexyl) peroxydicarbonate, dimyristyl peroxydicarbonate, di 2-ethoxyethyl peroxydicarbonate, dimethoxy isopropyl peroxydicarbonate, di(3-methyl-3-methoxybutyl) peroxydicarbonate, and diallyl peroxydicarbonate; peroxy esters such as t-butyl peroxy acetate, t-butyl peroxyisobutyrate, t-butyl peroxypivalate, t-butyl peroxyneodecanoate, cumyl peroxyneodecanoate, t-butyl peroxy-2-ethyl hexanoate, t-butyl peroxy-3,5,5-trimethyl hexanoate, t-butyl peroxy laurate, t-butyl peroxybenzoate, di t-butyl peroxy isophthalate, 2,5-dimethyl-2,5-di(benzoylperoxy)hexane, t-butyl peroxy maleic acid, t-butyl peroxy isopropyl carbonate, cumyl peroxyoctoate, t-hexylperoxy neodecanoate, t-hexylperoxy pivalate, t-butyl peroxyneohexanoate, t-hexylperoxy neohexanoate, and cumyl peroxy neohexanoate; acetyl cyclohexylsulfonyl peroxide, and t-butyl peroxy allyl carbonate. The organic peroxide may be used alone or in combination of a plurality of kinds thereof.

In the photocurable resin composition according to the present invention, when an organic peroxide is used, a curing accelerator can be blended for the purpose of promoting the redox reaction. The curing accelerator is not particularly limited. As the curing accelerator, saccharin (o-benzoic sulfimide), hydrazine compounds, amine compounds, mercaptan compounds, transition metal containing compounds, and the like are preferably used.

Examples of the hydrazine compounds include, for example, 1-acetyl-2-phenylhydrazine, 1-acetyl-2(p-tolyl) hydrazine, 1-benzoyl-2-phenylhydrazine, 1-(1',1',1'-trifluoro)acetyl-2-phenylhydrazine, 1,5-diphenyl-carbohydrazine, 1-formyl-2-phenylhydrazine, 1-acetyl-2-(p-bromophenyl)hydrazine, 1-acetyl-2-(p-nitrophenyl)hydrazine, 1-acetyl-2-(2'-phenylethylhydrazine), ethyl carbazate, p-nitrophenylhydrazine, and p-trisulfonylhydrazide.

Examples of the amine compounds include, for example, heterocyclic secondary amines such as 2-ethylhexylamine, 1,2,3,4-tetrahydroquinone, and 1,2,3,4-tetrahydroquinaldine; heterocyclic tertiary amines such as quinoline, methylquinoline, quinaldine, and quinoxaline phenazine; aromatic tertiary amines such as N,N-dimethyl-para-toluidine, N,N-dimethyl-anisidine, and N,N-dimethylaniline; and azole-based compounds such as 1,2,4-triazole, oxazole, oxadiazole, thiadiazole, benzotriazole, hydroxybenzotriazole, benzoxazole, 1,2,3-benzothiadiazole, and 3-mercaptobenzotrizole.

Examples of the mercaptan compounds include, for example, n-dodecyl mercaptan, ethyl mercaptan, butyl mercaptan, tris-[(3-mercaptopropionyloxy)-ethyl]-isocyanurate, pentaerythritol tetrakis(3-mercaptopropionate), dipentaerythritol hexakis(3-mercaptopropionate), trimethylolpropane tris(3-mercaptopropionate), trimethylolpropane tristhioglycolate, and pentaerythritol tetrakisthioglycolate.

As the transition metal containing compounds, metal chelate complex salts are preferably used. Examples of the metal chelate complex salts include, for example, pentanedione iron, pentanedione cobalt, pentanedione copper, propylenediamine copper, ethylenediamine copper, iron naphtate, nickel naphtate, cobalt naphtate, copper naphtate, copper octate, iron hexoate, iron propionate, and acetylacetone vanadium.

Examples of the storage stabilizers include radical absorbers such as benzoquinone, hydroquinone, and hydroquinone monomethyl ether, and metal chelating agents such as ethylenediaminetetraacetic acid or 2-sodium salt thereof, oxalic acid, acetylacetone, and o-aminophenol.

Examples of the antioxidants include, for example, quinone-based compounds such as $\beta$-naphthoquinone, 2-methoxy-1,4-naphthoquinone, methylhydroquinone, hydroquinone, hydroquinone monomethyl ether, mono-tert-butylhydroquinone, 2,5-di-tert-butylhydroquinone, p-benzoquinone, 2,5-diphenyl-p-benzoquinone, and 2,5-di-tert-butyl-p-benzoquinone; phenol-based compounds such as phenothiazine, 2,2-methylene-bis(4-methyl-6-tert-butylphenol), catechol, tert-butylcatechol, 2-butyl-4-hydroxyanisole, 2,6-di-tert-butyl-p-cresol, 2-tert-butyl-6-(3-tert-butyl-2-hydroxy-5-methylbenzyl)-4-methylphenylacrylate, 2-[1-(2-hydroxy-3,5-di-tert-pentylphenyl)ethyl]-4,6-di-tert-pentylphenylacrylate,

4,4'-butylidenebis(6-tert-butyl-3-methylphenol), 4,4'-thiobis(6-tert-butyl-3-methylphenol), 3,9-bis[2-[3-(3-tert-butyl-4-hydroxy-5-methylphenyl)propionyloxy]-1,1-dimethylethyl]-2,4,8,10-tetraoxaspiro[5,5]undecane, pentaerythritol tetrakis [3-(3,5-di-tert-butyl-4-hydroxyphenyl)propionate], thiodiethylene bis[3-(3,5-di-tert-butyl-4-hydroxyphenyl)propionate], octadecyl-3-(3,5-di-tert-butyl-4-hydroxyphenyl)propionate, N,N'-hexane-1,6-diylbis[3-(3,5-di-tert-butyl-4-hydroxyphenyl)propionamide], benzenepropanoic acid, 3,5-bis(1,1-dimethylethyl)-4-hydroxy, C7-C9 side chain alkyl esters, 2,4-dimethyl-6-(1-methyl pentadecyl)phenol, diethyl[[3,5-bis(1,1-dimethylethyl)-4-hydroxyphenyl]methyl]phosphonate, 3,3',3",5,5',5"-hexa-tert-butyl-a,a',a"-(mesitylene-2,4,6-tolyl)tri-p-cresol, calcium diethyl bis[[3,5-bis(1,1-dimethylethyl)-4-hydroxyphenyl]methyl]phosphonate, 4,6-bis(octylthiomethyl)-o-cresol, ethylene bis(oxyethylene)bis[3-(5-tert-butyl-4-hydroxy-m-tolyl)propionate], hexamethylene bis[3-(3,5-di-tert-butyl-4-hydroxyphenyl)propionate, 1,3,5-tris(3,5-di-tert-butyl-4-hydroxybenzyl)-1,3,5-triazine-2,4,6(1H,3H,5H)-trione, 1,3,5-tris[(4-tert-butyl-3-hydroxy-2,6-xylyl) methyl]-1,3,5-triazine-2,4,6(1H,3H,5H)-trione, a reaction product of N-phenylbenzene amine and 2,4,6-trimethyl pentene, 2,6-di-tert-butyl-4-(4,6-bis(octylthio)-1,3,5-triazin-2-ylamino)phenol, picric acid, and citric acid; phosphorus-based compounds such as tris(2,4-di-tert-butylphenyl)phosphite, tris[2-[[2,4,8,10-tetra-tert-butyldibenzo[d,f][1,3,2]dioxaphosphephin-6-yl]oxy]ethyl]amine, bis(2,4-di-tert-butylphenyl)pentaerythritol diphosphite, bis[2,4-bis(1,1-dimethylethyl)-6-methylphenyl]ethyl ester phosphorous acid, tetrakis(2,4-di-tert-butylphenyl)[1,1-bisphenyl]-4,4'-diylbisphosphonite, and 6-[3-(3-tert-butyl-4-hydroxy-5-methylphenyl)propoxy]-2,4,8,10-tetra-tert-butyldibanz[d,f][1,3,2]dioxaphosphephine; sulfur-based compounds such as dilauryl 3,3'-thiodipropionate, dimyristyl 3,3'-thiodipropionate, distearyl 3,3'-thiodipropionate, pentaerythrityl tetrakis(3-laurylthiopropionate), and 2-mercaptobenzimidazole; amine-based compounds such as phenothiazine; lactone-based compounds; and vitamin E-based compounds. Among them, as the antioxidant, phenol-based compounds are suitable.

Examples of the photostabilizer include, for example, hindered amine-based compounds such as bis(2,2,6,6-tetramethyl-4-piperidyl)sebacate, bis(1,2,2,6,6-pentamethyl-4-piperidyl)sebacate, 4-benzoyloxy-2,2,6,6-tetramethylpiperidine, 1-[2-[3-(3,5-di-tert-butyl-4-hydroxyphenyl)propionyloxy]ethyl]-4-[3-(3,5-di-tert-butyl-4-hydroxyphenyl)propionyloxy]-2,2,6,6-tetramethylpiperidine, 1,2,2,6,6-pentamethyl-4-piperidinyl-methacrylate, bis(1,2,2,6,6-pentamethyl-4-piperidinyl)[[3,5-bis(1,1-dimethylethyl)-4-hydroxyphenyl]methyl]butyl malonate, decanedioic acid bis(2,2,6,6-tetramethyl-1(octyloxy)-4-piperidinyl) esters, a reaction product of 1,1-dimethyl ethyl hydroperoxide and octane, N,N',N",N"'-tetrakis-(4,6-bis-(butyl-(N-methyl-2,2,6,6-tetramethylpiperidin-4-yl)amino)-triazin-2-yl)-4,7-diazadecane-1,10-diamine, a polycondensate of dibutylamine · 1,3,5-triazine · N,N'-bis(2,2,6,6-tetramethyl-4-piperidyl-1,6-hexamethylene diamine and N-(2,2,6,6-tetramethyl-4-piperidyl)butylamine, poly[[6-(1,1,3,3-tetramethylbutyl)amino-1,3,5-triazine-2,4-diyl][(2,2,6,6-tetramethyl-4-piperidyl)imino]hexamethylene [(2,2,6,6-tetramethyl-4-piperidyl)imino]], a polymerized product of dimethyl succinate and 4-hydroxy-2,2,6,6-tetramethyl-1-piperidine ethanol, 2,2,4,4-tetramethyl-20-(β-lauryloxycarbonyl)ethyl-7-oxa-3,20-diazadispiro[5·1·11·2]heneicosan-21-one, β-alanine, N,-(2,2,6,6-tetramethyl-4-piperidinyl)-dodecyl ester/tetradecyl ester, N-acetyl-3-dodecyl-1-(2,2,6,6-tetramethyl-4-piperidinyl)pyrrolidin-2,5-dione, 2,2,4,4-tetramethyl-7-oxa-3,20-diazadispiro[5,1,11,2]heneicosan-21-one, 2,2,4,4-tetramethyl-21-oxa-3,20-diazadicyclo-[5,1,11,2]-heneicosane-20-propanoic acid dodecyl ester/tetradecyl ester, propane dioic acid, [(4-methoxy phenyl)-methylene]-bis(1,2,2,6,6-pentamethyl-4-piperidinyl)ester, higher fatty acid esters of 2,2,6,6-tetramethyl-4-piperidinol, 1,3-benzene dicarboxamide, and N,N'-bis(2,2,6,6-tetramethyl-4-piperidinyl); benzophenone-based compounds such as octabenzone; benzotriazole-based compounds such as 2-(2H-benzotriazol-2-yl)-4-(1,1,3,3-tetramethylbutyl)phenol, 2-(2-hydroxy-5-methylphenyl)benzotriazole, 2-[2-hydroxy-3-(3,4,5,6-tetrahydrophthalimide-methyl)-5-methylphenyl]benzotriazole, 2-(3-tert-butyl-2-hydroxy-5-methylphenyl)-5-chlorobenzotriazole, 2-(2-hydroxy-3,5-di-tert-pentylphenyl)benzotriazole, a reaction product of methyl 3-(3-(2H-benzotriazol-2-yl)-5-tert-butyl-4-hydroxyphenyl)propionate and polyethylene glycol, and 2-(2H-benzotriazol-2-yl)-6-dodecyl-4-methylphenol; benzoate-based compounds such as 2,4-di-tert-butylphenyl-3,5-di-tert-butyl-4-hydroxy benzoate; and triazine-based compounds such as 2-(4,6-diphenyl-1,3,5-triazin-2-yl)-5-[(hexyl)oxy]phenol. The photostabilizer is preferably hindered amine-based compounds.

The photocurable resin composition according to the present invention can be produced by a conventionally known method. The photocurable resin composition according to the present invention can be produced by, for example, blending predetermined amounts of the component (A) to component (C) and other components and mixing them using a mixing mean such as a mixer, preferably at a temperature of 10 to 70°C preferably for 0.1 to 5 hours. Since the photocurable resin composition according to the present invention has the photocurable property, the photocurable resin composition according to the present invention is preferably produced in a light shielding environment.

<Coating method>

As a method for coating the photocurable resin composition according to the present invention on an adherend, for example, methods such as dispensing using an automatic coating machine, spraying, inkjet, screen printing, gravure printing, dipping, and spin coating can be used. From the perspective of coatability, the photocurable resin composition according to the present invention is preferably liquid at 25°C.

<Curing method>

The photocurable resin composition according to the present invention can be cured by emitting light such as ultraviolet rays or visible rays. The light source for emitting is not particularly limited. Examples of the light source include, for example, low-pressure mercury lamps, medium-pressure mercury lamps, high-pressure mercury lamps, ultrahigh-pressure mercury lamps, black light lamps, microwave-excited mercury lamps, metal halide lamps, sodium lamps, halogen lamps, xenon lamps, LEDs, fluorescent lamps, sunlight, and electron beam emitting devices. The light source is preferably LED from the viewpoint of less thermal damage to an adherend. The illumination dose of light emission is preferably 3 $kJ/m^2$ or more, and more preferably 5 $kJ/m^2$ or more, from the perspective of characteristics of cured products. The illumination dose of light emission is preferably 70 $kJ/m^2$ or less, more preferably 60 $kJ/m^2$ or less, and particularly preferably 50 $kJ/m^2$ or less, from the viewpoint of tact time in the curing step.

<Cured product>

A cured product according to the present invention is obtained by irradiating the photocurable resin composition according to the present invention with light such as ultraviolet rays or visible rays by the above curing method, followed by curing. In one embodiment, the cured product according to the present invention is obtained by irradiating the above photocurable resin composition with light. The cured product according to the present invention is obtained by any curing method, as long as it is obtained by curing the photocurable resin composition according to the present invention.

<Applications>

The photocurable resin composition according to the present invention can be used for sealing agents, adhesives, coating agents, casting agents, potting agents, and the like. Note that, when it is used in such applications, the photocurable resin composition according to the present invention is preferably liquid at 25°C. Since the cured product of the photocurable resin composition according to the present invention is a rubber elastic body excellent in at least one of low gas permeability, low moisture permeability, heat resistance, acid resistance, and flexibility, the cured product according to the present invention can be used for, for example, laminated bodies such as fuel cells, solar cells, dye sensitized solar cells, lithium ion batteries, electrolytic condensers, liquid crystal displays, organic EL displays, electronic paper, LEDs, hard disk devices, photodiodes, optical communication · circuits, electric wires · cables · optical fibers, optical isolators, and IC cards, sensors, substrates, and pharmaceutical and medical instruments and devices. Since the photocurable resin composition according to the present invention has excellent adhesion strength to adherends of various materials, it is particularly suitable for adhesion between different kinds of materials such as adhesion between a metal and plastic and adhesion between different plastic materials.

One embodiment of the present invention is a sealing agent or adhesive consisting of the above photocurable resin composition.

<Adherend>

Since the photocurable resin composition according to the present invention has excellent adhesion strength to various materials, various metals, glasses, plastics, and the like can be used as the adherend. Among them, since the photocurable resin composition according to the present invention exhibits excellent adhesion strength to aluminum, acrylic resins, and polycarbonates, it is particularly suitably used for an adherend selected from the group consisting of aluminum, acrylic resins, and polycarbonates.

In one embodiment, the sealing agent or adhesive according to the present invention is used for an adherend containing at least one material selected from the group consisting of aluminum, acrylic resins, and polycarbonates.

<Sealing method>

When the photocurable resin composition according to the present invention is used for a sealing agent, a sealing method is not particularly limited. Representative examples of the sealing method include FIPG (form in place gasket), CIPG (cure in place gasket), MIPG (mold in place gasket), and liquid injection molding.

Examples

Hereinafter, the present invention will be described in more detail by way of Examples, but the present invention is not limited to these Examples.

[Examples 1 to 4 and Comparative Examples 1 to 5]

The following components were provided to prepare a photocurable resin composition.

<Production of polyisobutylene having an acryloyloxy ethoxy phenyl group (component (A))>

After the inside of a container of a 5 L separable flask was replaced with nitrogen, 200 mL of n-hexane and 2000 mL of butyl chloride were added thereto, and were cooled to -70°C while being stirred in a nitrogen atmosphere. Next, 840 mL (9 mol) of isobutylene, 12 g (0.05 mol) of p-dicumyl chloride, and 1.1 g (0.012 mol) of 2-methylpyridine were added thereto. After the reaction mixture was cooled to -70°C, 5.0 mL (0.05 mol) of titanium tetrachloride was added thereto, to initiate polymerization. Three hours after the polymerization, 40 g of phenoxyethyl acrylate (Light Acrylate PO-A, available from kyoeisha Chemical Co., Ltd.) and 110 mL of titanium tetrachloride were added thereto. Thereafter, stirring was continued at -70°C for 4 hours, and 1000 mL of methanol was added thereto, to stop the reaction.

The supernatant was separated from the reaction solution, and the solvent was removed. Thereafter, the product was dissolved in 3000 mL of n-hexane, washed with 3000 mL of pure water three times, and reprecipitated from methanol. Then, the solvent was removed under reduced pressure, and the obtained polymer was dried in vacuum at 80°C for 24 hours, to obtain polyisobutylene having an acryloyloxy ethoxy phenyl group (component (A)).

The produced component (A) contained a $-[CH_2C(CH_3)_2]-$ unit and contained two acryloyl groups. More specifically, the produced component (A) was a polymer having the general formula (1) in which $R^1$ is a phenylene group, PIB is a polyisobutylene backbone, $R^4$ is a bivalent hydrocarbon group (ethylene group) having 2 carbon atoms, $R^2$ and $R^3$ are a hydrogen atom, $R^5$ is a hydrogen atom, and n is 2. Note that, the number average molecular weight (chromatography method (size exclusion chromatography method), in terms of polystyrene) of the component (A) was 11,100, and the viscosity (25°C) of the component (A) was 1550 Pa·s.

Component (B)

Component (B-1): Compound in which two or more trimethoxy silyl groups and two or more acryloyl groups are bonded to an organic chain, and a functional group equivalent in one molecule is trimethoxy silyl group: acryloyl group = 1:1, product name X-12-1048 (available from Shin-Etsu Chemical Co., Ltd.), weight average molecular weight of 1172

Component (B-2): 8-Methacryloxyoctyltrimethoxysilane, product name KBM-5803 (available from Shin-Etsu Chemical Co., Ltd.), weight average molecular weight of 318.5

Component (B')

Component (B'-1): 3-Methacryloxypropyltrimethoxysilane, product name KBM-503 (available from Shin-Etsu Chemical Co., Ltd.), weight average molecular weight of 234.3

Component (B'-2): 3-Acryloxypropyltrimethoxysilane, product name KBM-5103 (available from Shin-Etsu Chemical Co., Ltd.), weight average molecular weight of 248.4

Component (B'-3): Vinyltrimethoxysilane, product name KBM-1003 (available from Shin-Etsu Chemical Co., Ltd.), weight average molecular weight of 190.3

Component (B'-4): 3-Glycidyloxypropyltrimethoxysilane, product name KBM-403 (available from Shin-Etsu Chemical Co., Ltd.), weight average molecular weight of 236.3

Component (B'-5): 3-Mercaptopropyl trimethoxysilane, product name KBM-803 (available from Shin-Etsu Chemical Co., Ltd.), weight average molecular weight of 196.4

Component (C) (photoradical polymerization initiator): 2,4,6-trimethylbenzoyldiphenylphosphine oxide, product name Omnirad (registered trademark) TPO (available from IGM Resin B.V.)

Component (D): Isobornyl acrylate, product name Light Acrylate IB-XA (available from kyoeisha Chemical Co., Ltd.)

Component (E): Fumed silica surface-treated with dimethyl silicone oil, product name AEROSIL (registered trademark) RY200 (available from NIPPON AEROSIL CO., LTD.), BET specific surface area of 100 $m^2/g$

Component (F): Silicone-based defoaming agent, product name BYK-1799 (available from BYK-Chemie GmbH)

The components other than the component (C) were weighed in a container for stirring and were stirred with a mixer for 30 minutes. Next, the component (C) was added thereto under the light shielding condition, followed by stirring with a mixer for 30 minutes. The detailed preparation amounts were in accordance with on Table 1. All the numerical values of Table 1 are written in parts by mass. All the tests were performed at 25°C.

The test methods used in Examples and Comparative Examples in Table 1 are as follows.

[Shearing adhesion strength (ADC/PC)]

On a test piece formed of aluminum die cast of width: 25 mm × length: 100 mm × thickness: 1 mm, each of the photocurable resin compositions of Examples and Comparative Examples was coated. Thereafter, a transparent test piece formed of polycarbonate was pasted thereon using a jig so that the overlapped surface had a dimension of 25 mm × 10 mm and a thickness of 1 mm. A belt conveyor-type LEDUV irradiator was used to emit UV (wavelength: 365 nm, accumulated amount of light: 40 $kJ/m^2$) from a side of the test piece formed of polycarbonate to cure the photocurable resin composition. The prepared test piece was used to measure the tensile shearing adhesion strength (unit: MPa) with a universal tensile tester (tensile rate of 50 mm/min.) at 25°C according to JIS K6850:1999. The shearing adhesion strength was a measurement value obtained at maximum strength. The values described in Table 1 were an average value of N = 3. A preferable shearing adhesion strength of an adherend of aluminum die cast/polycarbonate is 0.40 MPa or more. Furthermore, change ratios in Examples 1 to 4 and Comparative Examples 2 to 5 were calculated based on Comparative Example 1, which was free from the component (B) and the component (B').

Change ratio (%) = (shearing adhesion strength of each Example or each Comparative Example - shearing adhesion strength of Comparative Example 1) / shearing adhesion strength of Comparative Example 1 × 100

[Shearing adhesion strength (PMMA/PC)]

On a test piece formed of an acrylic resin of width: 25 mm × length: 100 mm × thickness: 1 mm, each of the photocurable resin compositions of Examples and Comparative Examples was coated. Thereafter, a transparent test piece formed of polycarbonate was pasted thereon using a jig so that the overlapped surface had a dimension of 25 mm × 10 mm and a thickness of 1 mm. A belt conveyor-type LEDUV irradiator was used to emit UV (wavelength: 365 nm, accumulated amount of light: 40 $kJ/m^2$) from a side of the test piece formed of polycarbonate to cure the photocurable resin composition. The prepared test piece was used to measure the tensile shearing adhesion strength (unit: MPa) with a universal tensile tester (tensile rate of 50 mm/min.) at 25°C according to JIS K6850:1999. The tensile shearing adhesion strength was a value obtained at maximum strength. A preferable shearing adhesion strength of an adherend of acrylic resin/polycarbonate is 0.60 MPa or more. Furthermore, change ratios in Examples 1 to 4 and Comparative Examples 2 to 5 were calculated based on Comparative Example 1, which was free from the component (B) and the component (B').

Change ratio (%) = (shearing adhesion strength of each Example or each Comparative Example - shearing adhesion strength of Comparative Example 1) / shearing adhesion strength of Comparative Example 1 × 100

[Shearing adhesion strength (PC/PC)]

On a transparent test piece formed of polycarbonate of width: 25 mm × length: 100 mm × thickness: 1 mm, each of the photocurable resin compositions of Examples and Comparative Examples was coated. Thereafter, another test piece formed of polycarbonate was pasted thereon using a jig so that the overlapped surface had a dimension of 25 mm × 10 mm and a thickness of 1 mm. A belt conveyor-type LEDUV irradiator was used to emit UV (wavelength: 365 nm, accumulated amount of light: 40 $kJ/m^2$) to cure the photocurable resin composition. The prepared test piece was used to measure the tensile shearing adhesion strength (unit: MPa) with a universal tensile tester (tensile rate of 50 mm/min.) at 25°C according to JIS K6850:1999. The tensile shearing adhesion strength was a value obtained at maximum strength. A preferable shearing adhesion strength of an adherend of polycarbonate/polycarbonate is 0.60 MPa or more. Furthermore, change ratios in Examples 1 to 4 and Comparative Examples 2 to 5 were calculated based on Comparative Example 1, which was free from the component (B) and the component (B').

Change ratio (%) = (shearing adhesion strength of each Example or each Comparative Example - shearing adhesion strength of Comparative Example 1) / shearing adhesion strength of Comparative Example 1 $\times$ 100

[Table 1]

| | | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|---|
| A | Polyisobutylene having acryloyl group | 100 | 100 | 100 | 100 | 100 | 100 | 100 | 100 | 100 |
| B-1 | X-12-1048 | 1.4 | 1.4 | 7.58 | | | | | | |
| B-2 | KBM-5803 | | | | 1.4 | | | | | |
| B'-1 | KBM-503 | | 1.4 | | | | | | | |
| B'-2 | KBM-5103 | | | | | | 1.4 | | | |
| B'-3 | KBM-1003 | | | | | | | 1.4 | | |
| B'-4 | KBM-403 | | | | | | | | 1.4 | |
| B'-5 | KBM-803 | | | | | | | | | 1.4 |
| C | DOUBLECURE TPO | 1.8 | 1.8 | 1.8 | 1.8 | 1.8 | 1.8 | 1.8 | 1.8 | 1.8 |
| D | IB-XA | 20 | 20 | 20 | 20 | 20 | 20 | 20 | 20 | 20 |
| E | AEROSIL RY200 | 16.5 | 16.5 | 16.5 | 16.5 | 16.5 | 16.5 | 16.5 | 16.5 | 16.5 |
| F | BYK-1799 | 1.67 | 1.67 | 1.67 | 1.67 | 1.67 | 1.67 | 1.67 | 1.67 | 1.67 |
| ADC /PC | Measurement value | 0.42 | 0.62 | 0.62 | 0.55 | 0.34 | 0.48 | 0.48 | 0.36 | 0.25 |
| | Change ratio | 24% | 82% | 82% | 62% | - | 41% | 41% | 6% | -26% |
| PMMA /PC | Measurement value | 0.66 | 0.71 | 0.69 | 0.60 | 0.55 | 0.49 | 0.46 | 0.37 | 0.24 |
| | Change ratio | 20% | 29% | 25% | 9% | - | -11% | -16% | -33% | -56% |
| PC/PC | Measurement value | 0.98 | 0.69 | 0.94 | 0.85 | 0.54 | 0.82 | 0.77 | 0.55 | 0.31 |
| | Change ratio | 81% | 28% | 74% | 57% | - | 52% | 43% | 2% | -43% |

As shown in Table 1, it was confirmed that the results of the shearing adhesion strength using the photocurable resin compositions of Examples 1 to 4 showed improved shearing adhesion strength compared with Comparative Example 1 in which all the aluminum die cast, the acrylic resin, and the polycarbonate were free from the component (B) and the component (B'). On the other hand, Comparative Examples 2 to 4 which contained the component (B') showed the results of decreased shearing adhesion strength to the acrylic resin compared with Comparative Example 1. Moreover, in Comparative Example 5, a decrease in the shearing adhesion strength was found in all three kinds of materials compared with Comparative Example 1.

In addition, resin strength of Examples 1 to 4 and Comparative Examples 1 to 3 was measured.

[Resin strength (tensile strength)]

The thickness of the photocurable resin composition of each of Examples and Comparative Examples was set to 1 mm, ultraviolet rays (wavelength: 365 nm, accumulated amount of light: 40 $kJ/m^2$) were emitted to cure the photocurable resin composition, thereby preparing a sheet-like cured product. It was punched with a dumbbell of No. 3 to prepare a test piece. Both ends of the test piece were fixed to the chuck so that the long axis of the test piece was aligned with the center of the chuck. The test piece was pulled at a tensile rate of 500 mm/min, and the maximum load was measured. The "tensile strength (MPa)" was calculated from the above maximum load. Results are shown in Table 2. The details are in accordance with JIS K 6251 (2010). Here, the resin strength of the cured product according to the present invention is more preferably 2.2 MPa or more (or more than 2.2 MPa). The change ratios of Examples 1 to 4 and Comparative Examples 2 and 3 were calculated based on Comparative Example 1 that was free from the component (B) and the component (B').

Change ratio (%) = (Resin strength of each Example or each Comparative Example - resin strength of Comparative Example 1) / resin strength of Comparative Example 1 $\times$ 100

[Table 2]

| | | Example 1 | Example 2 | Example 3 | Example 4 | Comparative Example 1 | Comparative Example 2 | Comparative Example 3 |
|---|---|---|---|---|---|---|---|---|
| Resin strength | Measurement value | 2.4 | 2.7 | 2.8 | 2.4 | 2.0 | 2.2 | 2.0 |
| | Change ratio | 20% | 35% | 40% | 20% | - | 10% | 0% |

As shown in Table 2, the cured products of the photocurable resin compositions of Examples 1 to 4 showed improved resin strength compared with the cured product of the photocurable resin composition of Comparative Example 1. On the other hand, the cured product of the photocurable resin composition of Comparative Example 2 showed improved resins strength compared with the cured product of the photocurable resin composition of Comparative Example 1, but showed insufficiently improved resin strength compared with Examples 1 to 4. The cured product of the photocurable resin composition of Comparative Example 3 showed neither a decrease nor improvement of the resin strength compared with the cured product of the photocurable resin composition of Comparative Example 1.

As described above, the photocurable resin composition containing the component (A) to the component (C) has high adhesion strength to adherends of various materials such as aluminum, acrylic resins, and polycarbonates. Moreover, the photocurable resin composition containing the component (A) to the component (C) enables to provide a tough cured product excellent in resin strength.

Industrial Applicability

Since the photocurable resin composition according to the present invention has high adhesion strength to various materials and its cured product has high resin strength, it can be used for various adhesion applications and seal applications. In particular, the photocurable resin composition according to the present invention is industrially applicable as adhesives and sealing agent for different materials.

The present application is based on Japanese Patent Application No. 2023-145146, filed September 7, 2023, the disclosed contents of which are incorporated herein by reference in its entirety.

## Claims

**1.** A photocurable resin composition comprising: a component (A) to a component (C) below:

component (A): a polyisobutylene resin containing one or more (meth)acryloyl groups and a - $[CH_2C(CH_3)_2]$- unit;
component (B): a compound having one or more (meth)acryloyl groups and one or more hydrolyzable silyl groups, having a main chain consisting of an organic chain, and having a weight average molecular weight of 300 or more (provided that the component (A) is excluded); and
component (C): a photoradical polymerization initiator.

**2.** The photocurable resin composition according to claim 1, wherein the photocurable resin composition comprises 0.01 to 20 parts by mass of the component (B) relative to 100 parts by mass of the component (A).

**3.** The photocurable resin composition according to claim 1 or 2, wherein the component (C) is an acylphosphine oxide-based photoradical polymerization initiator.

**4.** The photocurable resin composition according to claim 1 or 2, further comprising a (meth)acrylic monomer as a component (D).

**5.** The photocurable resin composition according to claim 1 or 2, further comprising an inorganic filler as a component (E).

**6.** The photocurable resin composition according to claim 5, wherein the photocurable resin composition comprises 1 to 50 parts by mass of the component (E) relative to 100 parts by mass of the component (A).

**7.** A sealing agent or adhesive consisting of the photocurable resin composition according to claim 1 or 2.

**8.** The sealing agent or adhesive according to claim 7, which is used for an adherend containing at least one material selected from the group consisting of aluminum, an acrylic resin, and a polycarbonate.

**9.** A cured product obtained by irradiating the photocurable resin composition according to claim 1 or 2 with light.

**INTERNATIONAL SEARCH REPORT**

International application No.
**PCT/JP2024/024698**

**A. CLASSIFICATION OF SUBJECT MATTER**

***C08F 290/04***(2006.01)i; ***C09J 4/02***(2006.01)i; ***C09J 11/04***(2006.01)i; ***C09J 11/06***(2006.01)i; ***C09K 3/10***(2006.01)i
FI: C08F290/04; C09K3/10 E; C09J11/06; C09J4/02; C09J11/04

According to International Patent Classification (IPC) or to both national classification and IPC

**B. FIELDS SEARCHED**

Minimum documentation searched (classification system followed by classification symbols)

C08F290/04; C09J4/02; C09J11/04; C09J11/06; C09K3/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/190421 A1 (THREEBOND CO., LTD.) 18 October 2018 (2018-10-18) claims, paragraphs [0010], [0012], [0025], [0027], [0041], [0048]-[0049], [0066], [0068], [0070], [0081], examples | 1-9 |
| X | WO 2022/044596 A1 (THREEBOND CO., LTD.) 03 March 2022 (2022-03-03) claims, paragraphs [0082], [0085], [0089], [0113]-[0114], [0116], [0128], examples | 1-4, 7-9 |
| A | WO 2018/003855 A1 (THREEBOND CO., LTD.) 04 January 2018 (2018-01-04) paragraph [0078] | 1-9 |
| A | JP 2022-065339 A (THREEBOND CO., LTD.) 27 April 2022 (2022-04-27) claims, examples | 1-9 |
| A | WO 2016/152392 A1 (CEMEDINE CO., LTD.) 29 September 2016 (2016-09-29) claims, examples | 1-9 |
| A | JP 2018-168304 A (LINTEC CORPORATION) 01 November 2018 (2018-11-01) claims, examples | 1-9 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 September 2024** | **17 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/024698**

| Patent document cited in search report | Publication date (day/month/year) | Patent family member(s) | Publication date (day/month/year) |
|---|---|---|---|
| WO 2018/190421 A1 | 18 October 2018 | US 2020/0157270 A1<br>claims, paragraphs [0015], [0038], [0058], [0060], [0074], [0081]-[0082], [0101], [0103], [0105], [0120], examples<br>EP 3611200 A1<br>CN 110520454 A | |
| WO 2022/044596 A1 | 03 March 2022 | US 2023/0340247 A1<br>claims, paragraphs [0084], [0090], [0093], [0119]-[0120], [0122], [0133], examples<br>EP 4206248 A1<br>CN 115885122 A | |
| WO 2018/003855 A1 | 04 January 2018 | US 2019/0300690 A1<br>paragraph [0138]<br>EP 3476900 A1<br>CN 109312165 A<br>KR 10-2019-0022511 A | |
| JP 2022-065339 A | 27 April 2022 | (Family: none) | |
| WO 2016/152392 A1 | 29 September 2016 | CN 107428891 A<br>KR 10-2017-0129725 A | |
| JP 2018-168304 A | 01 November 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020023674 A
- JP 2013216782 A
- JP 2023145146 A


### Non-patent literature cited in the description


- *Polymer Bulletin*, 1981, vol. 6, 135-141
- **T. P. LIAO** ; **J. P. KENNEDY**. *Polymer Bulletin*, 1988, vol. 20, 253-260